# EUROPÄISCHE PATENTSCHRIFT

(11) **EP 0 499 709 B1**
(45) Veröffentlichungstag und Bekanntmachung des Hinweises auf die Patenterteilung: **14.08.1996**
(21) Anmeldenummer: 91121209.0
(22) Anmeldetag: 11.12.1991
(51) Int. Cl.: B60H 1/00, B60H 1/03

(54) **Fahrzeuginnenraum-Klimatisierungsvorrichtung**
Vehicle interior air conditioning device
Dispositif de conditionnement de l'habitacle d'un véhicule

(30) Priorität: 20.02.1991 DE 4105143
(43) Veröffentlichungstag der Anmeldung: 26.08.1992
(73) Patentinhaber: Webasto AG Fahrzeugtechnik, D-82131 Stockdorf (DE)
(72) Erfinder: Wenhart, Christian, W-8000 München 40 (DE)
(74) Vertreter: Wiese, Gerhard

(56) Entgegenhaltungen:
- DE-A- 3 609 098
- DE-A- 3 836 559
- US-A- 4 852 469
- PATENT ABSTRACTS OF JAPAN vol. 5, no. 61 (M-65)(733) 24. April 1981 & JP-A-56 013 216 ( NIPPON DENSO ) 9. Februar 1981
- PATENT ABSTRACTS OF JAPAN vol. 10, no. 138 (M-480)(2195) 21. Mai 1986 & JP-A-60 261 725 ( HONDA GIKEN KOGYO K.K. ) 25. Dezember 1985

## Beschreibung

Die Erfindung bezieht sich auf eine Fahrzeuginnenraum-Klimatisierungsvorrichtung gemäß dem Oberbegriff des Patentanspruchs 1.

Eine derartige Fahrzeuginnenraum-Klimatisierungsvorrichtung ist aus der JP-A-56-13216 bekannt. Bei der dort offenbarten Heizeinrichtung handelt es sich um einen im Luftstrom zum Fahrzeuginnenraum angeordneten Wärmetauscher, der von der vom Antriebsmotor beheizten Kühlflüssigkeit durchströmt wird. Eine Erwärmung des Fahrzeuginnenraums bei Stillstand des Antriebsmotors ist nicht möglich.

Aus US-A-4 852 469 ist ein automatisches Belüftungssystem für einen geschlossenen Raum, wie einen Fahrzeuginnenraum, bekannt, wobei ein oder mehrere Belüftungseinrichtungen vorgesehen sind. In Abhängigkeit von einem Innenraum-Temperatursensor und einem Außenfeuchtesensor, wie einem Regensensor, werden die Belüftungseinrichtungen, wie Fenster, Schiebedach und abnehmbares Verdeck, über eine Steuereinrichtung derart angesteuert, daß, wenn ein vorbestimmter Fahrzeuginnenraumtemperaturschwellwert ermittelt mit Hilfe des Innentemperatursensors überschritten und mittels des Außenfeuchtesensors festgestellt wird, daß kein Regen niedergeht, die Belüftungseinrichtungen angesteuert und aktiviert werden, wobei beispielsweise das Schiebedach und/oder das Fenster geöffnet werden. Dieser Stand der Technik befaßt sich somit ausschließlich mit der Belüftung des Fahrzeuginnenraums.

Ferner sind beispielsweise aus DE-A-36 09 098 motorunabhängig betreibbare Heizgeräte bekannt, die in ein Fahrzeug eingebaut werden können, und die ein eigenes Gebläse und ein Steuergerät haben, mittels welchem der Fahrzeuginnenraum im Bedarfsfall unabhängig von dem Betrieb der Brennkraftmaschine des Fahrzeugs beheizt werden kann. Das Einschalten des Heizgeräts erfolgt bei Unterschreiten eines vorgegebenen unteren Temperaturgrenzwertes. Ein solches motorunabhängig betreibbares Heizgerät stellt eine selbständige Einheit dar, die ausschließlich zu Heizzwecken im Bedarfsfall eingesetzt wird.

Bisher wurden die Fahrzeugbelüftungssysteme und motorunabhängig betreibbare Heizgeräte mittels separaten Steuerungen betrieben, die manuell von einer Bedienungsperson aktiviert werden mußten.

Die Erfindung zielt darauf ab, eine Fahrzeuginnenraum-Klimatisierungsvorrichtung bereitzustellen, mittels der außer einem Kühlen auch ein Beheizen des Fahrzeuginnenraumes auch bei einem Stillstand des Fahrzeuges möglich ist.

Nach der Erfindung zeichnet sich hierzu eine Fahrzeuginnenraum-Klimatisierungsvorrichtung durch die im kennzeichnenden Teil des Patentanspruchs 1 angegebenen Merkmale aus.

Die erfindungsgemäße Fahrzeuginnenraum-Klimatisierungsvorrichtung verknüpft somit über eine Betriebssteuerschaltung und eine vorgegebene Temperaturabhängigkeit die Belüftungssysteme des Fahrzeugs und das motorunabhängig betreibbare Heizgerät zu einer kombinierten Funktionseinheit, welche weitgehend unabhängig von manuellen Bedienungshandgriffen einer Bedienungsperson arbeitet. Somit werden bei der Erfindung in einer Kombination Belüftungssysteme und Heizsysteme eines Fahrzeugs unter Erzielung einer Bedienungserleichterung und einer besseren Benutzerfreundlichkeit funktionsmäßig gekoppelt.

Gemäß einer bevorzugten Ausführungsform nach der Erfindung aktiviert die Betriebssteuerschaltung bei Überschreiten des vorgegebenen oberen Temperaturgrenzwertes bei einem motorunabhängigen Heizgerät mit gesondertem Gebläse dieses zusätzlich. Durch diese Auslegung kann zur verstärkten Kühlung des Fahrzeuginnenraums über die Betriebssteuerschaltung noch zusätzlich das Gebläse des motorunabhängig betreibbaren Heizgeräts genutzt werden. Durch eine solche Betriebsweise wird ermöglicht, daß auch bei stillstehender Brennkraftmaschine des Fahrzeugs eine gebläsegestützte Zwangskühlung des Fahrzeuginnenraums erreicht werden kann.

Vorzugsweise ist die Betriebssteuerschaltung über eine voreinstellbare Zeitgebereinrichtung, wie eine Vorwahluhr, aktivierbar. Durch diese betriebsmäßige Verknüpfung über die Betriebssteuerschaltung können somit auch die Vorwähleinrichtungen für ein motorunabhängig betreibbares Heizgerät zu Belüftungs- bzw. Kühlzwecken bei der erfindungsgemäßen Innenraum-Klimatisierungsvorrichtung genutzt werden.

Ferner zeichnet sich eine bevorzugte Auslegungsform der Innenraum-Klimatisierungsvorrichtung dadurch aus, daß die Betriebssteuerschaltung über eine Fernwirkeinrichtung aktivierbar ist. Auf diese Weise kann die erfindungsgemäße Innenraumklimatisierungsvorrichtung ferngesteuert in Betrieb genommen werden.

Ferner kann die Betriebssteuerschaltung hinsichtlich der Ansteuerung des Belüftungssystems und/oder des motorunabhängig betreibbaren Heizgeräts auch noch die Außentemperatur berücksichtigen, wozu vorzugsweise ein Außentemperatursensor mit der Betriebssteuerschaltung wirkungsmäßig gekoppelt ist.

Bei einer bevorzugten Auslegungsform umfaßt die Betriebssteuerschaltung Schaltrelais, die den jeweiligen Einrichtungen der Innenraum-Klimatisierungsvorrichtung zur Ansteuerung zugeordnet sind. Alternativ kann die Betriebssteuerschaltung auch in Form eines integrierten Schaltkreisbausteins, wie eines Mikrochip o.dgl., ausgelegt sein.

Die Erfindung wird nachstehend anhand einer bevorzugten Ausführungsform unter Bezugnahme auf die beigefügte Zeichnung näher erläutert. Darin zeigt:
- Fig. 1: ein schematisches Prinzipschaltbild einer Fahrzeuginnenraum-Klimatisierungsvorrichtung mit zugeordneter Betriebssteuerschaltung und
- Fig. 2: ein Beispiel einer Zustandstabelle zur Erläuterung der steuerbaren Betriebszustände der Fahrzeuginnenraum-Klimatisierungsvorrichtung.

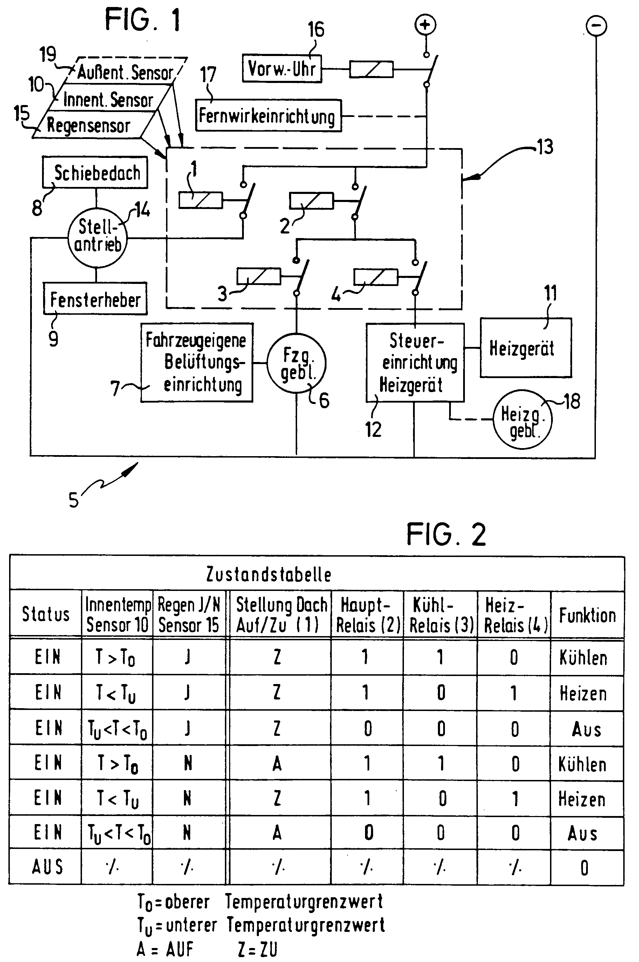

Bei dem in Fig. 1 gezeigten Beispiel sind in eine insgesamt mit 5 bezeichnete Innenraum-Klimatisierungsvorrichtung zu Belüftungszwecken ein Fahrzeuggebläse 6 einer fahrzeugeigenen Belüftungseinrichtung 7, eine öffen- und verschließbare Dachöffnung, wie ein Schiebedach 8, ein Schiebehebedach o. dgl. und eine öffen- und schließbare Fensteröffnung über einen Fensterheber miteinbezogen. Zu Heizzwecken umfaßt die Innenraum-Klimatisierungsvorrichtung 5 ein motorunabhängig betreibbares Heizgerät 11, welches über eine Steuereinrichtung 12 betreibbar ist.

Diese vorstehend genannten Einrichtungen sind funktionell über eine insgesamt mit 13 bezeichnete Betriebssteuerschaltung verknüpft. Beim dargestellten Beispiel ist die Betriebssteuerschaltung 13 als Relaisschaltung ausgebildet und umfaßt ein Relais 1 für einen Stellantrieb 14, der beispielsweise von einem Elektromotor gebildet wird, mittels dem das Schiebedach 8 und/oder der Fensterheber 9 des Fahrzeugs betätigbar sind. Ferner ist ein Hauptrelais 2 vorgesehen, welches die Aktivierung der Betriebssteuerschaltung 13 über eine voreinstellbare Zeitgebereinrichtung 16, wie eine Vorwahluhr und/oder eine Fernwirkeinrichtung 17 ermöglicht. Ferner umfaßt die Betriebssteuerschaltung 13 ein Relais 3 für das Fahrzeuggebläse 6 der fahrzeugeigenen Belüftungseinrichtung 7. Schließlich ist noch ein Relais 4 vorgesehen, welches für die Steuereinrichtung 12 des motorunabhängig betreibbaren Heizgeräts 11 bestimmt ist. Bei einem motorunabhängig betreibbaren Heizgerät 11 mit einem Gebläse 18 wird dieses hierüber angesteuert. Die Relais 1, 3 und 4 bilden bei der Betriebssteuerschaltung 13 die Ausgänge, während als Eingänge für die Betriebssteuerschaltung 13 ein Innenraumtemperatursensor 10 und ein Außenfeuchte-Sensor 15, wie ein Regensensor, vorgesehen sind. Wie in gebrochenen Linien in Fig. 1 eingetragen, kann gegebenenfalls als weiterer Eingang für die Betriebssteuerschaltung 13 ein Außentemperatursensor 19 vorgesehen sein.

Aus der Zustandstabelle nach Fig. 2 verwirklicht die Innenraum-Klimatisierungsvorrichtung 5 mit der Betriebssteuerschaltung 13 wenigstens die nachstehend beschriebenen Funktionsweisen.

Für den Innentemperatursensor 10 wird ein oberer Temperaturgrenzwert Tₒ und ein unterer Temperaturgrenzwert Tᵤ vorgegeben. Wenn die Innenraumtemperatur T größer als der obere Temperaturgrenzwert Tₒ ist, so prüft die Betriebssteuerschaltung 13, ob der Außenfeuchte-Sensor 15 ein Signal liefert oder nicht. Wenn der Außenfeuchte-Sensor 15 ein das Regnen wiedergebendes Signal liefert, wird bei über das Hauptrelais 2 aktivierter Betriebssteuerschaltung 13 über das Relais 3 nur das Fahrzeuggebläse 16 der fahrzeugeigenen Belüftungseinrichtung 7 eingeschaltet. Das Schiebedach 8 bleibt oder wird geschlossen und über den Fensterheber 9 bleibt oder wird die Fensteröffnung geschlossen. Der Stellantrieb 14 hierfür wird somit nicht aktiviert. Wie mit gebrochener Linie eingetragen ist, kann gegebenenfalls über das Relais 4 für die Steuereinrichtung 12 des motorunabhängigen Heizgeräts 11 zusätzlich bei dem Heizgerät 11 mit gesondertem Gebläse 18 dieses zur Unterstützung der Innenraumkühlung eingeschaltet werden. Wenn hingegen der Außenfeuchte-Sensor 15 kein Regnen erkennt, werden über die Betriebssteuerschaltung 13 auch das Schiebedach 8 und der Fensterheber 9 mittels des zugeordneten Stellantriebs 14 über das Relais 1 betätigt. Somit erfolgt bei der Innenraum-Klimatisierungsvorrichtung 5 eine effektive Kühlung des Fahrzeuginnenraums unter Nutzung der Einrichtungen des Belüftungssystems, wie des Schiebedachs 8, des Fensterhebers 9, des Fahrzeuggebläses 6 der fahrzeugeigenen Belüftungseinrichtung 7 und gegebenenfalls über das Gebläse 18 des motorunabhängig betreibbaren Heizgeräts 11.

Wenn die Innenraumtemperatur T kleiner als der vorgegebene, untere Temperaturgrenzwert Tᵤ ist, aktiviert die Betriebssteuerschaltung 13 unabhängig von dem Signal von dem Außenfeuchtesensor 15 über das Relais 4 die Steuereinrichtung 12 des motorunabhängigen Heizgeräts 11, so daß zum Beheizen des Fahrzeuginnenraums das motorunabhängige Heizgerät 11 in Betrieb genommen wird.

Wenn der vorgegebene untere Temperaturgrenzwert Tᵤ kleiner als die Fahrzeuginnenraumtemperatur T und diese wiederum kleiner als der vorgegebene, obere Temperaturgrenzwert Tₒ ist, ist die Betriebssteuerschaltung 13 ausgeschaltet.

Mit Hilfe der voreinstellbaren Zeitgebereinrichtung 16, wie einer Vorwahluhr, kann die Betriebssteuerschaltung 13 unter Vorgabe einer Zeitvorwahl, wie 12, 24, 48 Stunden oder weniger zu einem jeweils gewünschten Zeitpunkt aktiviert werden. In Abhängigkeit von den Sensoreingängen löst dann die Betriebssteuerschaltung 13 die voranstehend und anhand der Zustandstabelle nach Fig. 2 verdeutlichten Funktionen aus.

Alternativ oder zusätzlich kann über die Fernwirkeinrichtung 17, wie eine Sende- und Empfangseinrichtung, die Betriebssteuerschaltung 13 unter Verwirklichung einer Fernbedienung aktiviert werden. Nach der Aktivierung löst dann die Betriebssteuerschaltung 13 beispielsweise die anhand der Zustandstabelle nach Fig. 2 verdeutlichten Funktionen aus.

Gegebenenfalls kann die Auslösung der Funktionen der Betriebssteuerschaltung 13 auch noch abhängig von einem weiteren Eingang, einem Außentemperatursensor 19, bewirkt werden.

Mit Hilfe der Fernwirkeinrichtung 17 und/oder der voreinstellbaren Zeitgebereinrichtung 16 ermöglicht somit die erfindungsgemäße Innenraum-Klimatisierungsvorrichtung 5 einen Vorheizbetrieb für die Aufwärmung des Fahrzeuginnenraums oder einen Vorklimatisier-Betrieb des Fahrzeuginnenraumes, bei dem der Fahrzeuginnenraum in Abhängigkeit von den gegebenen Temperaturbedingungen gekühlt wird.

Selbstverständlich ist die Erfindung nicht auf die voranstehend beschriebenen Einzelheiten beschränkt, sondern es sind zahlreiche Abänderungen und Modifikationen möglich, die der Fachmann im Bedarfsfall treffen wird, ohne den Erfindungsgedanken zu verlassen, gemäß dem mittels einer Betriebssteuerschaltung 13 eine funktionelle Verknüpfung in Art einer Kombination von mehreren zu Belüftungszwecken und zu Heizzwecken eines Fahrzeuginnenraums dienenden Einrichtungen verwirklicht wird. Hierdurch lassen sich die Fahrzeuginnentemperaturen auf die jeweils gewünschten Verhältnisse unter Berücksichtigung von Außenumgebungsbedingungen so abstimmen, daß sich der Fahrkomfort beträchtlich verbessern läßt. Ferner ist die Innenraum-Klimatisierungsvorrichtung 5 so beschaffen, daß sich eine benutzerfreundliche Bedienungsweise dadurch ergibt, daß die Betriebssteuerschaltung 13 im wesentlichen ohne manuelle Bedienung der Einrichtungen des Fahrzeugbelüftungssystems und des Fahrzeugheizungssystems unter Berücksichtigung vorgegebener Bedingungen die jeweiligen Einrichtungen selbsttätig ansteuert und aktiviert.

### Bezugszeichen

- 1: Relais für Stellantrieb 14
- 2: Hauptrelais
- 3: Relais für Fahrzeuggebläse
- 4: Relais für Steuereinrichtung des motorunabhängigen Heizgeräts
- 5: Innenraum-Klimatisierungsvorrichtung insgesamt
- 6: Fahrzeuggebläse
- 7: fahrzeugeigene Belüftungseinrichtung
- 8: Schiebedach
- 9: Fensterheber
- 10: Innentemperatursensor
- 11: motorunabhängiges Heizgerät
- 12: Steuereinrichtung desselben
- 13: Betriebssteuerschaltung insgesamt
- 14: Stellantrieb
- 15: Außenfeuchte-Sensor (Regensensor)
- 16: voreinstellbare Zeitgebereinrichtung
- 17: Fernwirkeinrichtung
- 18: Gebläse des motorunabhängigen Heizgeräts 11
- 19: Außentemperatursensor

## Patentansprüche

1. Fahrzeuginnenraum-Klimatisierungsvorrichtung (5), die aufweist:
ein Fahrzeuggebläse (6), einen Innentemperatursensor (10), einen Außenfeuchte-Sensor (15), eine Betätigungseinrichtung (14)
für wenigstens eine öffen- und schließbare Fahrzeugöffnung (Dachöffnung, Fensteröffnung), welchen eine Betriebssteuerschaltung (13) zugeordnet ist, die bei Überschreiten eines vorgegebenen Fahrzeuginnenraum-Temperaturschwellwertes (Tₒ) und bei Nichterkennen einer mittels eines Außenfeuchte-Sensors (15) erfaßten Außenfeuchte die Betätigungseinrichtung (14) ansteuert, und eine Heizeinrichtung (11), **dadurch gekennzeichnet,** daß die Heizeinrichtung als motorunabhängig betreibbares Heizgerät (11) ausgebildet ist, dessen Steuereinrichtung (12) mit der Betriebssteuerschaltung (13) derart verbunden ist, daß sie bei Unterschreiten eines vorgegebenen, unteren Temperaturgrenzwertes (Tᵤ) das motorunabhängige Heizgerät (11) ansteuert.

2. Fahrzeuginnenraum-Klimatisierungsvorrichtung nach Anspruch 1, dadurch gekennzeichnet, daß die Betriebssteuerschaltung (13) bei Überschreiten des vorgegebenen, oberen Temperaturgrenzwertes (Tₒ) bei einem motorunabhängigen Heizgerät (11) mit gesondertem Gebläse dieses zusätzlich aktiviert.

3. Fahrzeuginnenraum-Klimatisierungsvorrichtung nach Anspruch 1 oder 2, dadurch gekennzeichnet, daß die Betriebssteuerschaltung (13) über eine voreinstellbare Zeitgebereinrichtung (16) aktivierbar ist.

4. Fahrzeuginnenraum-Klimatisierungsvorrichtung nach einem der Ansprüche 1 bis 3, dadurch gekennzeichnet, daß die Betriebssteuerschaltung (13) über eine Fernwirkeinrichtung (17) aktivierbar ist.

5. Fahrzeuginnenraum-Klimatisierungsvorrichtung nach einem der vorangehenden Ansprüche, dadurch gekennzeichnet, daß die Betriebssteuerschaltung (13) von einem Außentemperatursensor (19) abhängig arbeitet.

6. Fahrzeuginnenraum-Klimatisierungsvorrichtung nach einem der vorangehenden Ansprüche, dadurch **gekennzeichnet,** daß die Betriebssteuerschaltung (13) den Einrichtungen der Innenraum-Klimatisierungsvorrichtung zugeordnete Schaltrelais (1 bis 4) umfaßt.

## Claims

1. An air conditioning device 5 for a vehicle interior and comprising:
a vehicle fan (6), an interior temperature sensor (10), an outside humidity sensor (15), an actuating device (14) for at least one openable and closable vehicle opening (roof aperture, window aperture), with which is associated an operating control circuit (13) which, when a predetermined vehicle interior temperature threshold (Tₒ)is exceeded and when an outside humidity sensor (15) fails to recognise exterior humidity, triggers the actuating device (14), and a heater (11), characterised in that the heater is constructed as a heater (11) which can be operated independently of the engine and of which the control device (12) is so connected to the operating control circuit (13) that when the temperature fails to reach a predetermined minimum limit (Tᵤ), it switches on the heater (11) which is independent of the engine.

2. A vehicle interior air conditioning device according to Claim 1, characterised in that the operating control circuit (13) additionally activates a separate fan of a heater (11) which operates independently of the engine when the predetermined upper temperature limit (Tₒ) is exceeded.

3. A vehicle interior air conditioning device according to Claim 1 or 2, characterised in that the operating control circuit (13) can be activated via a presettable timing device (16).

4. A vehicle interior air conditioning device according to one of Claims 1 to 3, characterised in that the operating control circuit (13) can be activated via a remote control device (17).

5. A vehicle interior air conditioning device according to one of the preceding Claims, characterised in that the operating control circuit (13) operates independently of an outside temperature sensor (19).

6. A vehicle interior air conditioning device according to one of the preceding Claims, characterised in that the operating control circuit (13) comprises switching relays (1 to 4) associated with the means comprised within the interior air conditioning device.

## Revendications

1. Dispositif de climatisation d'habitacle de véhicule (5) comprenant un ventilateur de véhicule (6), un capteur de température intérieure (10), un capteur d'humidité extérieure (15), un dispositif de commande (14) pour au moins un orifice de véhicule ouvrable ou obturable (ouverture de toit, orifice de fenêtre), auxquels correspond un circuit de commande (13) qui, quand on dépasse un seuil de température intérieure de véhicule (Tₒ) et quand on ne détecte pas une humidité extérieure captée par un capteur d'humidité extérieure (15), commande le dispositif de commande (14) et un dispositif de chauffage (11), caractérisé en ce que le dispositif de chauffage est un appareil de chauffage (11) alimenté indépendamment du moteur dont le dispositif de commande (12) est relié au circuit de commande (13), de sorte que lorsque la température descend en dessous d'une limite inférieure donnée de température (Tᵤ), l'appareil de chauffage (11) indépendant du moteur est enclenché.

2. Dispositif de climatisation d'habitacle de véhicule selon la revendication 1, caractérisé en ce que le circuit de commande (13), active en plus ce ventilateur si on dépasse la valeur limite supérieure de température (Tₒ) affichée d'un appareil de chauffage indépendant du moteur (11) à ventilateur particulier.

3. Dispositif de climatisation d'habitacle de véhicule selon la revendication 1 ou 2, caractérisé en ce que le circuit de commande (13) est activable par une minuterie réglable (16).

4. Dispositif de climatisation d'habitacle de véhicule selon l'une des revendications 1 à 3, caractérisé en ce que le dispositif de commande (13) peut être actionné par une télécommande (17).

5. Dispositif de climatisation d'habitacle de véhicule selon l'une des revendications précédentes, caractérisé en ce que le circuit de commande (13) fonctionne en relation avec un capteur (19) de température extérieure.

6. Dispositif de climatisation d'habitacle de véhicule selon l'une des revendications précédentes, caractérisé en ce que le circuit de commande (13) comprend les relais de commutation (1 à 4) correspondant aux installations du dispositif de climatisation d'habitacle.
